# EUROPEAN PATENT APPLICATION

(11) **EP 0 780 759 A1**
(43) Date of publication of application: **25.06.1997**
(21) Application number: 96309116.0
(22) Date of filing: 13.12.1996
(51) Int. Cl.: G06F 7/50

(54) **Elimination of math overflow flag generation delay in an alu**

(30) Priority: 22.12.1995 US 9206
(71) Applicant: Lucent Technologies Inc., Murray Hill, New Jersey 07974-0636 (US)
(72) Inventor: Diamondstein, Marc Stephen, Allentown, Pennsylvania 18104 (US); Srinivas, Hosahalli R., Allentowen, Pennsylvania 18104 (US); Kolagotla, Ravi Kumar, Breinigsville, Pennsylvania 18031 (US)
(74) Representative: Watts, Christopher Malcolm Kelway, Dr.

(57) **Abstract**

There is disclosed an ALU (10) that removes from the critical path of the ALU (10) the delay in computing a math overflow flag. The ALU (10) is structured such that when operating on operands having g+n bits, where g is the number of guard bits and n is the number of bits in an operand including a sign bit, the n-i least significant bits are operated on by an (n-i)-bit adder. Two (g+i)-bit adders are provided to operate on the (g+i) most significant bits. One of the two (g+i)-bit adders (22) is provided with a carry-in (36) of a logic one and the other of the two (g+i)-bit adders (20) is provided with a carry-in (32) of a logic zero. The two (g+i)-bit adders (20, 22) operate in parallel with each other, and also in parallel with the (n-i)-bit adder (26). The sum output bits (34, 38) from each of the two (g+i)-bit adders (20, 22) are processed to provide two potential math overflow flags (56, 58), one from the sum output of each of the two (g+i)-bit adders. Upon completion of the addition operation in the (n-i)-bit adder, the carry-out (30) bit from the (n-i)-bit adder is used to select one of the two potential math overflow flags (56, 58) as the math overflow flag (62) for the operation completed in the ALU (10).

## Description

### Technical Field

This invention relates generally to arithmetic logic units of microprocessors, and in particular to elimination of the math overflow flag generation delay in the arithmetic logic unit (ALU) of a microprocessor.

### Background of the Invention

The arithmetic logic unit of a microprocessor, such as a digital signal processor, is that portion of the logic circuitry of the microprocessor in which the arithmetic and logic operations are performed on data. The operations often involve at least one operand. The ALU produces two sets of output bits. One set of output bits represents the results of the operation performed on the operand or operands and is typically retained in an accumulator. The other set of output bits, known as status bits, is forwarded to status registers to set or clear various flags.

In fixed point ALU operations that involve two operands, such as addition and subtraction, the result of the ALU operation can exceed the capacity of the ALU. Exceeding capacity of the ALU is known as an overflow or overflow condition. Thus, each ALU operation has associated with it an evaluation of whether an overflow has occurred. If an overflow has occurred, the results of the operation may not be reliable and flags are set which give the user an awareness that an overflow has occurred.

A typical ALU has an adder that will add g+n bit operands, where the most significant g bits are the guard bits and n is the number of bits in each operand, including a sign bit in the most significant position. The ALU performs operations on g+n bits of two or more operands. Of the g+n bits output from the ALU, the upper most g+1 bits, which include the guard bits and the sign bit of the result of the ALU operation, are routed to a math overflow detector to determine whether an overflow has occurred. If the g+1 bits are all zeros or all ones, an overflow has not occurred. However, if the g+1 bits are not all zeros, or not all ones, a math overflow has occurred and the math overflow flag is set, such as to a logic high.

This technique of computing the math overflow flag in which the ALU operates on all g+n bits of each operand, then evaluates the upper most g+1 bits of the result in a math overflow detector to ascertain whether an overflow has occurred, introduces a delay in computing the math overflow flag. Since the evaluation of the upper most g+1 bits is both initiated and completed subsequent to producing the result of the operation of the ALU on the operands, the result of the ALU operation is not available for use immediately upon being computed. The delay introduced in computing the math overflow flag is said to be in the critical path of the ALU.

### Summary of the Invention

In accordance with an illustrative embodiment of the invention, an ALU is provided that removes from the critical path of the ALU the delay in computing a math overflow flag. The ALU is structured such that when operating on operands having g+n bits, where g is the number of guard bits and n is the number of bits in an operand including a sign bit, the n-i least significant bits are operated on by an (n-i)-bit adder, where i is an integer between 1 and n. Two (g+i)-bit adders are provided to operate on the remaining (g+i) high order, or most significant bits. One of the two (g+i)-bit adders is provided with a carry-in of a logic one and the other of the two (g+i)-bit adders is provided with a carry-in of a logic zero. The two (g+i)-bit adders operate in parallel with each other, and also in parallel with the (n-i)-bit adder. The sum output bits from each of the two (g+i)-bit adders are processed to provide two potential math overflow flags, one based on the sum output bits of each of the two (g+i)-bit adders. Upon completion of the addition operation in the (n-i)-bit adder, the carry-out bit from the (n-i)-bit adder is used to select one of the two potential math overflow flags as the math overflow flag for the operation completed in the ALU. An optimal value of i is that value which results in the overall circuitry having balanced delays. That is optimally i is chosen such that the two potential overflow flags, and selector control signals have about the same delay and arrive at a selector that will select one of the two potential overflow flags substantially simultaneously.

### Brief Description of the Drawings

The invention will now be described by way of example, with reference to the figures, in which:
Figure 1 is a schematic diagram of a portion of an arithmetic logic unit in accordance with an illustrative embodiment of the present invention;
Figure 2 is a schematic diagram of a portion of an arithmetic logic unit illustrating an alternative illustrative embodiment of the present invention;
Figure 3 is a schematic diagram of a portion of an arithmetic logic unit illustrating yet another alternative illustrative embodiment; and
Figure 4 is a schematic diagram of a portion of an arithmetic logic unit illustrating yet another alternative illustrative embodiment.

### Detailed Description

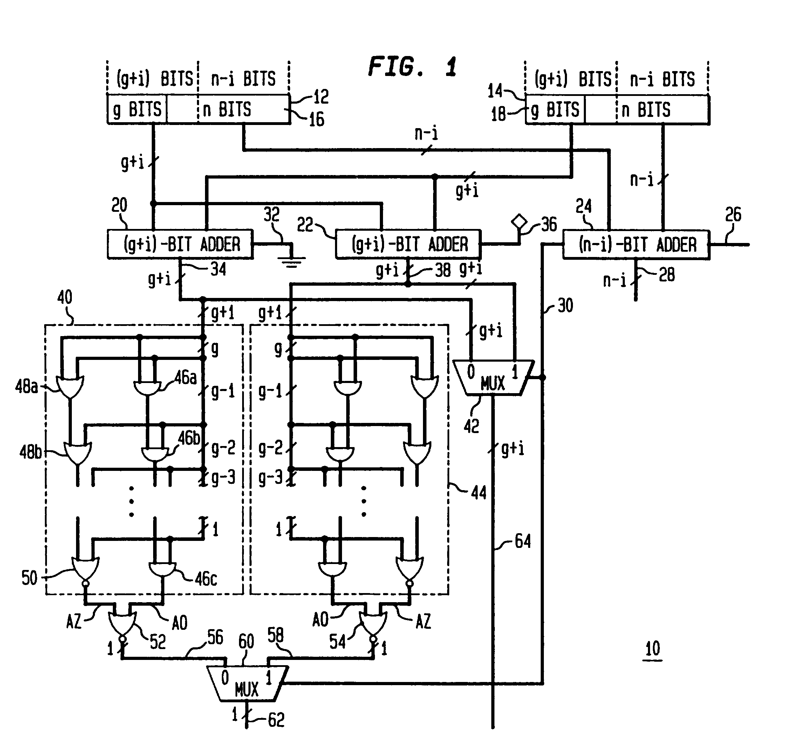

Figure 1 is a schematic diagram of a portion of an ALU 10 in accordance with an illustrative embodiment of the present invention. ALU 10 is a part of an integrated circuit such as a microprocessor or digital signal processor. Registers 12 and 14 are illustrative and are each adapted to store the binary representation of an operand 16 and 18, respectively. It is understood that operands need not be supplied from registers. ALU 10 performs an operation on operands 16 and 18, such as addition. Operands 16 and 18 each have n bits including a sign bit in the most significant position, and g guard bits. In accordance with known methods, a portion of the bits representing each operand are provided to adders. The bits of the two operands are added in adders 20, 22 and 24 as described below.

The n bits represent a numerical quantity, including a sign bit. The n-i least significant bits (where, as stated above, i is an integer between 1 and n) of each operand that represent a numerical quantity are routed, using known techniques, to a (n-i)-bit adder 24. The (n-i)-bit adder 24 receives the (n-i)-bits, together with a carry-in bit 26, if present, and adds the (n-i)-bits of the first and second operands 16 and 18 and the carry-in bit 26. Adder 24 produces (n-i)-bits of a sum presented at 28, and a carry-out bit at 30.

The g guard bits, one sign bit, and (i-1) remaining most significant bits of each operand 16 and 18, a total of (g+i)-bits of each operand, are routed using known techniques, to first and second (g+i)-bit adders 20 and 22. The carry-in bit 32 of adder 20 is tied to a logic low, such as ground. Adder 20 receives the (g+i)-bits of each operand, adds the bits of the operands together with the carry-in bit 32, and produces a (g+i)-bit sum 34.

The carry-in bit 36 of adder 22 is tied to a logic high, such as the power supply. Adder 22 receives the (g+i)-bits of each operand, adds the bits of the operands together with the carry-in bit 36, and produces a (g+i)-bit sum 38. The carry-out bit (not shown) may or may not be utilized.

The (g+i) sum bits 34 produced by adder 20 are provided as a first input to multiple input multiplexer 42. The most significant (g+1) bits of the (g+i) sum bits 34 are provided to detector circuit 40. The (g+i) sum bits 38 produced by adder 22 are provided as a second input to multiple input multiplexer 42. The most significant (g+1) bits of the (g+i) sum bits 38 are provided to detector circuit 44.

Detector circuits 40 and 44 detect whether the (g+1)-bits input to the detector circuit are all logic ones, or all logic zeros, or a combination of ones and zeros. One possible technique provides the (g+1)-bits as inputs to a series of cascaded AND gates to detect whether the bits are all ones, and the (g+1)-bits are provided as inputs to a series of cascaded OR gate, to detect whether the bits are all zeros. As shown in Figure 1, two of the (g+1)-bits are provided as inputs to the first AND gate 46a. The output of AND gate 46a and another of the (g+1)-bits are provided as the inputs to AND gate 46b. This structure continues through g AND gates to process all of the (g+1)-bits in sum output 34. The output AO of the last AND gate in the series, 46c, if a logic one, indicates all of the (g+1)-bits are logic ones.

Similarly, two of the (g+1)-bits are provided to the first OR gate 48a. The output of OR gate 48a and another of the (g+1)-bits are provided as the input to OR gate 48b. This structure continues through g OR gates. The output of the last OR gate is inverted. This may be achieved such as through an inverter, or replacing the last OR gate in the series with a NOR gate 50, as shown in Figure 1. The output AZ of NOR gate 50, if a logic one, indicates all of the (g+1)-bits are logic zeros. The outputs of AND gate 46c and NOR gate 50 are combined in NOR gate 52. Operation of detector circuit 44 may be identical to the operation of detector circuit 40, and provides outputs that are combined in NOR gate 54.

The outputs 56 and 58 from NOR gates 52 and 54, respectively, are provided as first and second inputs to multiplexer 60. Outputs 56 and 58 are first and second potential math overflow flags.

The carry-out bit 30 from adder 24 provides the control input to both multiplexers 42 and 60. The control input to the multiplexers 42 and 60 cause each multiplexer to select one of its inputs as its output.

In operation, operands 16 and 18 are written to registers 12 and 14, respectively, of ALU 10. (n-i)-bits of each operand are routed to adder 24, and added together with carry-in 26 if present. Adder 24 produces an (n-i) sum bit output 28 and a carry-out bit 30.

The remaining (g+i)-bits of each operand 16 and 18 are routed to adders 20 and 22. Since there are two possible states of carry-out 30, one of the adders 20 or 22 is provided with a carry-in that is a logic high, whereas the other of adders 22 or 20 is provided with a carry-in that is a logic low. Adders 20 and 22 operate concurrently, and concurrently with adder 24, to produce sum outputs 34 and 38. The sum outputs 34 and 38 are provided to multiplexer 42 and also to detector circuits 40 and 44 for evaluation. Detector circuits 40 and 44 evaluate the bits of sum outputs 34 and 38 to determine if the sum output bits are all ones, are all zeros, or if there is some combination of ones and zeros. Output 56 is a first potential overflow flag based on the (g+1) most significant bits of sum output 34 of adder 20, which has a carry-in bit that is low. Output 58 is a second potential overflow flag based on the (g+1) most significant bits of sum output 38 of adder 22, which has a carry-in bit that is high. The sum output of adders 20 and 22 are calculated concurrently, and concurrently with the calculation of sum output 28 to contribute to the balanced delay of signals 56, 58 and 30 arriving at multiplexer 60 substantially simultaneously. When the carry-out bit from adder 24 is available, a selection is made between the sum outputs of adders 20 and 22 as the correct sum of the (g+i)-bits, as well as a selection is made between the two potential math overflow flags 56 and 58 as the math overflow flag of ALU 10.

When the carry-out bit 30 of adder 24 takes on a first state, such as a logic high, multiplexer 42 selects as its output 64 the (g+i) sum bits output from adder 22. Multiplexer 60 selects the second potential math overflow flag 58 as its output 62. Outputs 62 and 64 selected by the respective multiplexers are provided by an adder in which the logic state of the carry-in bit is the same as the logic state of carry-out bit 30.

When the carry-out bit 30 of adder 24 takes on a second state, such as a logic low, multiplexer 42 selects as its output 64 the (g+i) sum bits output from adder 20, and multiplexer 60 selects as its output 62 the potential math overflow flag 56 generated based on the sum bits produced by adder 20. Outputs 62 and 64 selected by the respective multiplexers are produced by adders in which the logic state of the carry-in bit is the same as the logic state of carry-out bit 30. The invention, however, is not limited thereto.

The number of guard bits is typically smaller than n. As the number of guard bits increases, approaching n, the advantage of this technique declines. However, this technique is not slower than sequentially calculating the sum of (g+n) bits together with a carry-in bit, and subsequently ascertaining the math overflow flag of the resulting sum.

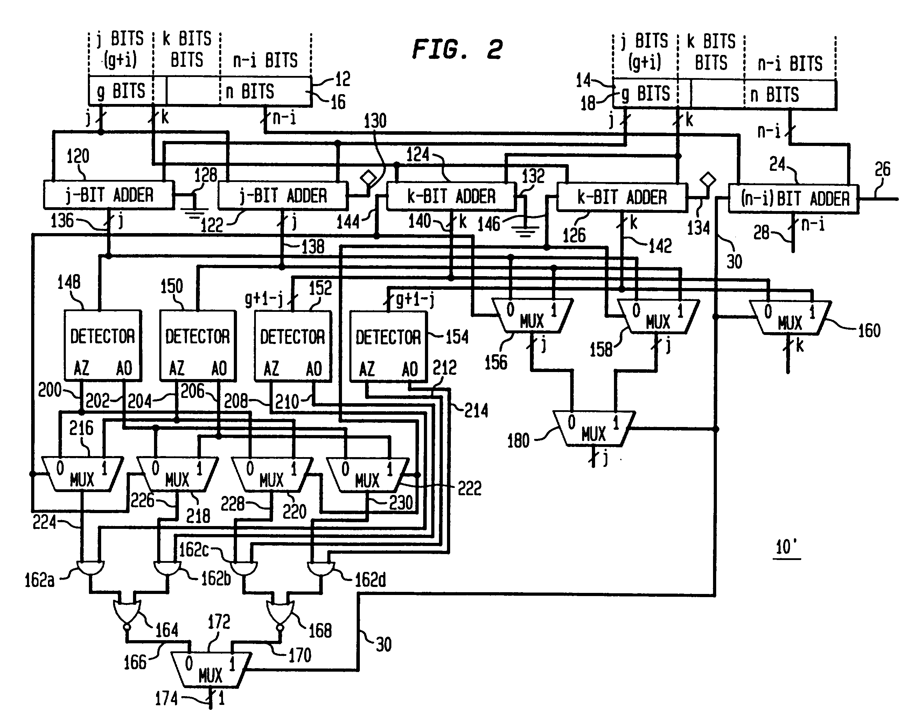

An alternative illustrative embodiment of the invention is shown in Figure 2. In the ALU 10' of the alternative illustrative embodiment, each operand is partitioned into three groups of bits. The (n-i) least significant bits of operands 16 and 18 are still provided to adder 24. Adder 24 adds the (n-i)-bits of the operand with carry-in bit 26, if present. Adder 24 provides (n-i) sum bits as output 28, and a carry-out bit 30.

The (g+i) most significant bits of each operand are divided or partitioned into two or more groups. In the alternative illustrative embodiment shown in Figure 2, the (g+i)-bits of each operand are divided into two groups: a first group of j bits and a second group of k bits, where j + k = g+i. To prevent (g+1-j) from becoming negative, j < g + 1 must be satisfied. The magnitude of j and k are chosen such that the overall circuit has balanced delays. In the illustrated embodiment, j represents the most significant bits of the (g+i)-bits, and k represent the low order or least significant bits of the (g+i)-bits. However, the invention is not limited thereto. Four adders 120, 122, 124, and 126 are used to construct a hierarchal carry-select adder. Adders 122 and 126 have a carry-in, respectively 130 and 134, tied to a logic high. Adders 120 and 124 have a carry-in, respectively 128 and 132, tied to a logic low. The first group of guard bits, j in number, of each operand 16 and 18 are provided to adders 120 and 122. The j bits are summed with their respective carry-in bits to produce j sum bits as respective outputs 136 and 138 from adders 120 and 122. The second group of guard bits, k in number, of each operand 16 and 18 are provided to adders 124 and 126. The k bits are summed with their respective carry-in bits and produce k sum bits as respective outputs 140 and 142 from adders 124 and 126. Each of adders 124 and 126 also produce a carry-out bit, respectively 144 and 146.

The j sum bits of output 136 are provided to detector circuit 148, and also as a first input to multiple input, multiple bit multiplexers 156 and 158. The j sum bits of output 138 are provided to detector circuit 150, and also as a second input to multiplexers 156 and 158. The k sum bits of output 140 are provided as a first input to multiplexer 160 and the (g+1-j) most significant bits of output 140 are provided to detector circuit 152. The k sum bits of output 142 are provided as a second input to multiplexer 160 and the (g+1-j) most significant bits of output 142 are provided to detector circuit 154. Multiplexer 156 is controlled by carry-out bit 144 of adder 124. The carry-out bit 146 of adder 126 provides the control input to multiplexer 158.

Detector circuits 148, 150, 152, and 154 evaluate whether the sum bits received by each circuit are all ones, are all zeros, or are a combination of ones and zeros. Circuits 148, 150, 152, and 154 operate in the same manner as circuits 40 and 44. Detector circuits 148, 150, 152 and 154 each produce two binary outputs, AZ and AO. The AZ output 200 from detector circuit 148 is provided as an input to multiplexers 216 and 220. The AO output 202 from detector circuit 148 is provided as an input to multiplexers 218 and 222. The AZ output 204 from detector circuit 150 provides a second input to multiplexers 216 and 220. The AO output 206 from detector circuit 150 provides a second input to multiplexers 218 and 222. The carry-out bit 144 from adder 124 provides the select input to multiplexers 216 and 218. Similarly the carry-out bit 146 from adder 126 provides the select input to multiplexers 220 and 222.

AND gates 162a, 162b, 162c and 162d combine outputs from the detector circuits either directly or as selected by multiplexers 216 through 222. AND gate 162a receives as its inputs output 224 from multiplexer 216 and output 208 from detector circuit 152, and provides its output as one of the inputs to NOR gate 164. AND gate 162b receives as its inputs output 226 from multiplexer 218 and output 210 from detector circuit 152, and provides its output as the other input to NOR gate 164. AND gate 162c receives as its inputs output 228 from multiplexer 220 and output 212 from detector circuit 154, and provides its output as one input to NOR gate 168. AND gate 162d receives as its inputs output 230 from multiplexer 222 and output 214 from detector circuit 154, and provides its output as the other input to NOR gate 168.

NOR gate 164 generates as an output 166 a first potential math overflow flag. The first potential math overflow flag is the correct math overflow flag when the carry-out 30 of adder 24 is a logic low. NOR gate 168 generates as an output 170 a second potential math overflow flag. The second potential math overflow flag is the correct math overflow flag when the carry-out 30 of adder 24 is a logic high. The math overflow flag is selected by multiplexer 172 based on the select input of carry-out 30.

The carry-out bit 30 from adder 24 provides the control input to multiplexers 160, 172 and 180. The control input to multiplexers 160, 172, 180, 216, 218, 220 and 222 cause each multiplexer to select one of its inputs as its output. The sum of the lower most (n-i)-bits of operands 16 and 18 is output 28. The sum of the k bits of operand 16 and 18, together with the carry-out of adder 24, is selected by multiplexer 160 from its two inputs. The sum of the j most significant bits of operands 16 and 18, including all carry-out bits from lower-bit sums is selected by multiplexers 156, 158 and 180.

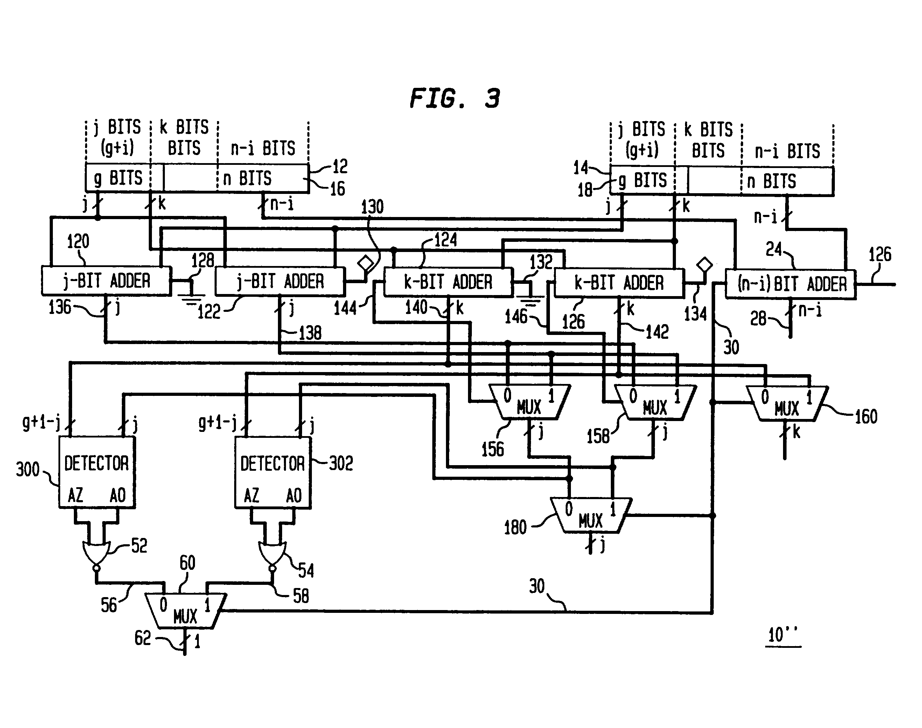

An alternative illustrative embodiment of the invention is shown in Figure 3. In ALU 10" shown in Figure 3, the detection circuitry is simplified. Detector circuit 300 receives as inputs the (g+1-j) most significant sum bits of output 140 from adder 124, and the j bits output from multiplexer 156. Detector circuit 302 receives as inputs the (g+1-j) most significant sum bits of output 142 from adder 126, and the j bits output from multiplexer 158. Each detector circuit operates in the same manner as detector circuits 40 and 44 and produces an AZ and an AO output. The AZ and AO outputs from detector circuits 300 and 302 provide the inputs to NOR gates 52 and 54, respectively. The remainder of the circuit in Figure 3 is unchanged from Figure 2. Operation of this alternative embodiment should be understood in view of the described operation of the illustrative embodiment shown in Figure 2.

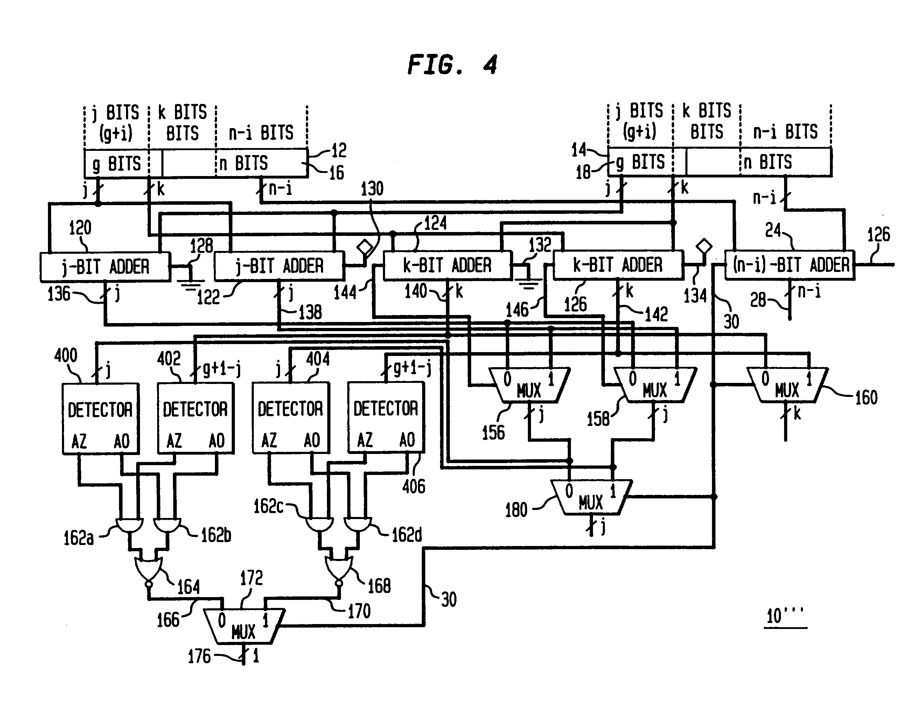

An alternative illustrative embodiment of the invention is shown in Figure 4. In ALU 10"' shown in Figure 4, detector circuit 400 receives as its inputs the j bits output from multiplexer 156. Detector circuit 402 receives as its inputs the (g+1-j) most significant sum bits of output 140 from adder 124. Detector circuit 404 receives as its inputs the j bits output from multiplexer 158. Detector circuit 406 receives as its inputs the (g+1-j) most significant sum bits of output 142 from adder 126. Each detector circuit operates in the same manner as detector circuits 40 and 44 and produces an AZ and an AO output. The outputs of detector circuits 400406 are provided as the inputs to AND gates 162a-162d as described above with respect to Figure 2. Operation of this alternative illustrative embodiment should be understood in view of the described operation of the illustrative embodiment shown in Figure 2.

The invention is particularly useful in communication systems and equipment employing integrated circuits including this technique. Such communication systems and equipment has the advantage of providing high speed digital additions and subtractions where reductions in time or increased functionality in the operation of an arithmetic logic unit is important.

In this manner, the correct sum of (g+i)-bits is selected simultaneously with selecting the correct potential math overflow flag. This technique has the advantage of removing calculation of the overflow flag from the critical path of ALUs 10, 10', 10" and 10"'. Removing calculation of the overflow flag from the critical path of the ALU permits a reduction in the cycle time of ALU, or alternatively, allows operations requiring more time to be performed in the same ALU cycle time.

While the illustrative embodiments of the invention have been described as operating on two operands, the invention could be applied to operating on one operand, in which case a second operand, if present, may be tied to zero.

While the illustrative embodiments of the invention have not been described as incorporating pipelining, one skilled in the art would recognize the enhanced computational efficiency available by utilizing pipelining in the design. Pipelining is achieved by initiating computation with a new data set before completing computations with a previous set of data. The more latches used in pipelining, the greater the depth of pipelining. Pipelining causes an initial latency in computation time required to fill the pipeline, but maximizes usage of resources such as adders.

## Claims

1. A method of computing a math overflow flag in an arithmetic logic unit capable of operating on at least one operand each having n-bits including a sign bit and g guard bits, the method characterized by the steps of:
allocating the (g+n)-bits of each of the at least one operand (16, 18) into a first group of bits (n-i) and a second group of bits (g+1);
calculating the sum of the first group of bits (n-i) of the at least one operand (16, 18) to produce a first sum output (28) and a first carry output (30);
simultaneously with calculating the sum of the first group of bits, calculating the sum of the second group of bits (g+i) of the at least one operand (16, 18), together with a carry-in (36) that is a logic high, to produce a second sum output (38);
evaluating the second sum output (38) to generate a first potential math overflow flag (56);
simultaneously with calculating the sum of the first group of bits (g+1), calculating another sum of the second group of bits (g+i), together with a carry-in (32) that is a logic low, to produce a third sum output (34);
evaluating the third sum output (34) to generate a second potential math overflow flag (58); and
selecting (60) the first potential math overflow flag (56) as the math overflow flag (62) of the ALU (10) when the first carry output (30) takes on a first state, and the second potential math overflow flag (58) as the math overflow flag (62) of the ALU (10) when the first carry output (30) takes on a second state.

2. A method as recited in claim 1, further characterized by the step of selecting the second sum output (38) as the sum of the second group of bits (g+i) when the first carry output (30) takes on a first state, and the third sum output (34) as the sum of the second group of bits (g+i) when the first carry output (30) takes on a second state.

3. A method as recited in claim 1, characterized in that the first group of bits (n-i) comprise the least significant of the (g+n)-bits.

4. A method as recited in claim 1, characterized in that the second group of bits (g+i) comprise the most significant of the (g+n)-bits.

5. A method of computing a math overflow flag in an arithmetic logic unit capable of operating on at least one operand each of said at least one operand having n-bits including a sign bit and g guard bits, the method characterized by the steps of:
allocating the (g+n)-bits of each of the at least one operands into a first group of bits (n-i) and a second group of bits (g+i);
calculating the sum of the first group of bits of the at least one operand (16, 18) to produce a first sum output (28) and a first carry output (30);
simultaneously with calculating the sum of the first group of bits (n-i), calculating the sum of the second group of bits (g+i) of the at least one operand, together with a carry-in (36) that is a logic high, to produce a second sum output (38);
evaluating the second sum output (38) to generate a first potential math overflow flag (58);
simultaneously with calculating the sum of the first group of bits, calculating another sum of the second group of bits (g+i), together with a carry-in (32) that is a logic low, to produce a third sum output (34);
evaluating the third sum output (34) to generate a second potential math overflow flag (56); and
selecting the second sum output (38) as the sum of the second group of bits (g+i) when the first carry output (30) takes on a first state, and the third sum output (34) as the sum of the second group of bits (g+i) when the first carry (30) output takes on a second state.

6. A method as recited in claim 5, further characterized by the step of:
selecting the first potential math overflow flag (58) as the math overflow flag (62) of the arithmetic logic unit when the first carry output (30) takes on a first state, and the second potential math overflow flag (56) as the math overflow flag (62) of the arithmetic logic unit when the first carry output (30) takes on a second state.

7. A method of computing a math overflow flag in an arithmetic logic unit capable of operating on at least one operand each having n bits, including a sign bit, and g guard bits, the method characterized by the steps of:
allocating the (g+n)-bits of each of the at least one operand (16, 18) into first (n-i), second (k), and third (j) groups of contiguous bits;
calculating the sum of the first group of bits to produce a first sum output (28) and a first carry output (30);
simultaneously with calculating the sum of the first group of bits, calculating the sum of the second group of bits, together with a carry-in (134) that is a logic high, to produce a second sum output (142) and a second carry output (146);
simultaneously with calculating the sum of the first group of bits, calculating the sum of the second group of bits, together with a carry-in that is a logic low (132), to produce a third sum output (140) and a third carry output (144);
simultaneously with calculating the sum of the first group of bits, calculating the sum of the third group of bits, together with a carry-in that is a logic high (130), to produce a fourth sum output (138);
simultaneously with calculating the sum of the first group of bits, calculating the sum of the third group of bits, together with a carry-in that is a logic low (128), to produce a fifth sum output (136);
evaluating the second (142), third (140), fourth (138) and fifth (136) sum outputs to generate a first potential math overflow flag (170);
evaluating the second (142), third (140), fourth (138) and fifth (136) sum outputs to generate a second potential math overflow flag (166); and
selecting the first potential math overflow flag (170) as the math overflow flag (174) when the first carry output (30) takes on a first state, and the second potential overflow flag (166) as the math overflow flag (174) when the first carry output (30) takes on a second state.

8. A method as recited in claim 7, further characterized by the step of:
selecting the second sum output (142) as the sum of the second group of bits when the first carry output (30) takes on a first state, and the third sum output (140) as the sum of the second group of bits when the first carry out (30) takes on a second state.

9. A method as recited in claim 7, further characterized by the step of:
selecting the fifth sum output as the sum of the third group of bits when the third carry output takes on a first state, and the fourth sum output as the sum of the third group of bits when the third carry out takes on a second state.

10. A method of computing a math overflow flag in an arithmetic logic unit capable of operating on at least one operand each such operand having n bits, including a sign bit, and g guard bits, the method characterized by the steps of:
allocating the (g+n)-bits of each of the at least one operand (16, 18) into first (n-i), second (k), and third (j) groups of bits;
calculating the sum of the first group of bits to produce a first sum output (28)and a first carry output (30);
simultaneously with calculating the sum of the first group of bits, calculating the sum of the second group of bits, together with a carry-in that is a logic high (134), to produce a second sum output (142) and a second carry output (146);
simultaneously with calculating the sum of the first group of bits, calculating the sum of the second group of bits, together with a carry-in that is a logic low (132), to produce a third sum output (140) and a third carry output (144);
simultaneously with calculating the sum of the first group of bits, calculating the sum of the third group of bits, together with a carry-in that is a logic high (130), to produce a fourth sum output (138);
simultaneously with calculating the sum of the first group of bits, calculating the sum of the third group of bits, together with a carry-in that is a logic low (128), to produce a fifth sum output (136);
evaluating the second, third, fourth and fifth sum outputs (142, 140, 138, 136) to generate a first potential math overflow flag (170);
evaluating the second, third, fourth and fifth sum outputs (142, 140, 138, 136) to generate a second potential math overflow flag (166); and
selecting the second sum output (142) as the sum of the second group of bits when the first carry output (30) takes on a first state, and the third sum output (140) as the sum of the second group of bits when the first carry out (30) takes on a second state.

11. A method as recited in claim 10, further characterized by the steps of:
selecting the first potential math overflow flag (170) as the math overflow flag (174) when the first carry output (30) takes on a first state, and the second potential overflow flag (166) as the math overflow flag (174) when the first carry output (30) takes on a second state.

12. A method of computing a math overflow flag in an arithmetic logic unit capable of operating on at least one operand each having n bits, including a sign bit, and g guard bits, the method characterized by the steps of:
allocating the (g+n)-bits of each of the at least one operand (16, 18) into first (n-i), second (k), and third (j) groups of bits;
calculating the sum of the first group of bits to produce a first sum output (28) and a first carry output (30);
simultaneously with calculating the sum of the first group of bits, calculating the sum of the second group of bits, together with a carry-in that is a logic high (134), to produce a second sum output (142) and a second carry output (146);
simultaneously with calculating the sum of the first group of bits, calculating the sum of the second group of bits, together with a carry-in that is a logic low (132), to produce a third sum output (140) and a third carry output (144);
simultaneously with calculating the sum of the first group of bits, calculating the sum of the third group of bits, together with a carry-in that is a logic high (130), to produce a fourth sum output (138);
simultaneously with calculating the sum of the first group of bits, calculating the sum of the third group of bits, together with a carry-in that is a logic low (128), to produce a fifth sum output (136);
evaluating the second, third, fourth, and fifth sum outputs (142, 140, 138, 136) to generate a first potential math overflow flag (170);
evaluating the second, third, fourth and fifth sum outputs (142, 140, 138, 136) to generate a second potential math overflow flag (166); and
selecting the fifth sum as the sum of the third group of bits when the third carry output (144) takes on a first state, and the sixth sum output (136) as the sum of the third group of bits when the third carry out (144) takes on a second state.

13. A method as recited in claim 12, further characterized by the steps of:
selecting the first potential math overflow flag (170) as the math overflow flag (174) when the first carry output (30) takes on a first state, and the second potential overflow flag (166) as the math overflow flag (174) when the first carry output (30) takes on a second state.

14. An arithmetic logic unit for computing a math overflow flag, the arithmetic logic unit capable of operating on at least one operand each of said at least one operand having n bits including a sign bit, and g guard bits characterized by:
an (n-i)-bit adder (24) for receiving (n-i)-bits of a binary representation of each of at least one operand (16, 18) and for calculating the sum of the binary representations, the (n-i)-bit adder providing a first sum output (28) that is a binary representation of the sum of the at least two operands (16, 18), and a first carry-out (30);
a first (g+i)-bit adder (22) for receiving the g guard bits and the sign bit of each of the at least one operand (16, 18) and a carry-in bit (36) that is a logic high, the first (g+i)-bit adder for calculating the sum of the (g+i)-bits of the at least one operand and the carry-in bit that is a logic high, the first (g+i)-bit adder providing a second sum output (38);
evaluating circuitry (44, 54) for evaluating the second sum output (38) and for generating a first potential math overflow flag (58);
a second (g+i)-bit adder (20) for receiving the g guard bits and the sign bit of each of the at least one operand (16, 18) and a carry-in bit (32) that is a logic low, and for calculating the sum of the (g+i)-bits of the at least one operand, the second (g+i)-bit adder providing a third sum output (34);
evaluating circuitry (40, 52) for evaluating the third sum output (34) and for generating a second potential math overflow flag (56); and
flag selection circuitry (60) for selecting the first potential math overflow flag (58) as the math overflow flag (62) when the first carry-out (30) takes on a first state, and for selecting the second potential math overflow flag (56) as the math overflow flag (62) when the first carry-out (30) takes on a second state.

15. An arithmetic logic unit as recited in claim 14, further characterized by:
selection circuitry (42) for selecting the second sum output (38) as the sum of the (g+i)-bits of the at least one operand when the first carry-out (30) takes on a first state, and for selecting the third sum (34) output as the sum of the (g+i)-bits of the at least one operand when the first carry-out (30) takes on a second state.

16. An arithmetic logic unit as recited in claim 14 or 15, further characterized as being part of a processor.

17. An arithmetic logic unit as recited in claims 14, 15 or 16, further characterized as being part of a digital signal processor.
